# EUROPÄISCHE PATENTANMELDUNG

(11) **EP 1 495 847 A1**
(43) Veröffentlichungstag der Anmeldung: **12.01.2005**
(21) Anmeldenummer: 04450100.5
(22) Anmeldetag: 29.04.2004
(51) Int. Cl.: B29B 17/00, B29C 47/38, B29C 47/50, B29C 47/58

(54) **Welle einer Zerkleinerungsvorrichtung und Zerkleinerungsvorrichtung**

(30) Priorität: 05.05.2003 AT 2003674
(71) Anmelder: Barth, Gerold, 4073 Wilhering (AT); Dobersberger, Manfred, 4061 Pasching (AT); Kroiss, Günter, 4061 Pasching (AT); Pichler, Thomas, 4170 Haslach (AT); Schmedler, Walter, 4850 Timelkam (AT)
(72) Erfinder: Barth, Gerold, 4073 Wilhering (AT); Dobersberger, Manfred, 4061 Pasching (AT); Kroiss, Günter, 4061 Pasching (AT); Pichler, Thomas, 4170 Haslach (AT); Schmedler, Walter, 4850 Timelkam (AT)
(74) Vertreter: Hehenberger, Reinhard, Dipl.-Ing., Patentanwalt

(57) **Zusammenfassung**

Eine Welle einer Vorrichtung zum Zerkleinern von insbesondere folienartigen, thermoplastischen Kunststoffen weist wenigstens eine Wendel (8) als Zerkleinerungswerkzeug auf. Die Wendel (8) ist von wenigstens einer Durchbrechung (10) in Wendelsegmente (9) unterteilt. Die Durchbrechung (10) wird durch Flächen (11) begrenzt, die an den Enden (12, 13) der einzelnen Wendelsegmente (9) liegen. Die Flächen (11) sind im Winkel von etwa 90° zur Drehachse (14) der Welle (3) angeordnet.

## Beschreibung

Die Erfindung betriff eine Welle einer Vorrichtung zum Zerkleinern von insbesondere folienartigen, thermoplastischen Kunststoffen, mit wenigstens einer Wendel als Zerkleinerungswerkzeug auf der Welle, wobei die Wendel von wenigstens einer Durchbrechung in Wendelsegmente unterteilt ist.

Eine derartige Welle ist aus der AT 6 145 U bekannt. Die dort beschriebene Welle weist Wendel- bzw. Schneckensegmente auf, zwischen denen Durchbrechungen liegen. Diese Durchbrechungen werden von Flächen begrenzt, die in Axialebenen liegen. Damit sind mehrere Nachteile verbunden. Einer dieser Nachteile ist, dass sich im Bereich dieser End- bzw. Stirnflächen Kunststoffpartikel oder Folienstücke festsetzen können, die nicht nur die Schneid- bzw. Trennwirkung zwischen dem Kamm und den Wendelsegmenten, sondern auch eine kontinuierliche Weiterförderung der Kunststoffteilchen oder Folienstücke beeinträchtigen können. Ein weiterer Nachteil ist, das durch diese Form der Durchbrechungen bzw. End- oder Stirnflächen ein ungünstiges Längenverhältnis zwischen Durchbrechungen und Wendelsegmenten entsteht, da für eine bestimmte, in Achsrichtung gemessene Länge einer Durchbrechung eine unverhältnismäßig starke Verkürzung der Wendelsegmentlänge entsteht. Die dadurch entstehende, relativ geringe Wendelsegmentlänge wirkt sich wiederum nachteilig für eine kontinuierliche und zuverlässige Weiterförderung des Kunststoffes aus.

Der Erfindung liegt daher die Aufgabe zugrunde diese Nachteile zu vermeiden bzw. zu verringern.

Gelöst wird diese Aufgabe mit einer Welle mit den Merkmalen des Anspruches 1.

Bei der Erfindung sind die die Durchbrechungen begrenzenden Flächen an den Enden der Wendelsegmente nicht mehr in einer Axialebene, sondern in einem Winkel größer 0° zur Drehachse der Welle angeordnet. Durch diese "Schrägstellung" der Flächen mit Bezug zur Drehachse wird im Vergleich zur AT 6 145 U erreicht, dass die effektive Wendelsegmentlänge vergrößert wird, während die in Achsrichtung gemessene Länge der Durchbrechungen gleich bleiben kann. Durch die "Schrägstellung" der Flächen wird auch eine Anhäufung von Kunststoffteilchen an diesen Flächen verringert, da diese nun leichter von diesen Flächen abgleiten können.

In einer bevorzugten Ausführungsform der Erfindung sind die Flächen in einem Winkel größer 45° vorzugsweise größer 80° zur Drehachse der Welle angeordnet. Bei einer derartigen Anordnung der Flächen kommen die Vorteile der Erfindung gegenüber dem Stand der Technik verstärkt zum Tragen.

In einer besonders bevorzugten Ausführungsform der Erfindung sind die Flächen im Winkel von etwa 90° zur Drehachse der Welle angeordnet. Diese Ausführungsform bietet den Vorteil, dass die Durchbrechungen sehr einfach hergestellt werden können, indem die Durchbrechungen bei stillstehendem Werkzeug durch einfache Drehung der Welle ausgefräst werden können. Dadurch entstehen Flächen, die erfindungsgemäß annähernd parallel zueinander angeordnet sind.

In einer alternativen Ausführungsform kann auch vorgesehen sein, dass die Flächen in einem Winkel kleiner 20° vorzugsweise kleiner 10° zueinander geneigt sind. Durch diese Anordnung kann auf Besonderheiten z.B. im Hinblick auf die zu zerkleinernden Kunststoffe, wie Folien oder andere z.B. Granulat oder vorzerkleinertes Material, Rücksicht genommen werden, bei denen sich eine Schrägstellung der Flächen vorteilhaft erweisen kann.

Besonders bevorzugt ist dabei, wenn die Flächen eine Freistellung aufweisen, die ausgehend von den Enden der Wendelsegmente in einem Winkel kleiner 10° vorzugsweise kleiner 5° zu einer Radialebene angeordnet sind. Eine derartige Freistellung kann Ablagerungen an der Fläche, welche z.B. die Zerkleinerungsfunktion beeinträchtigen oder den Wirkungsgrad verschlechtern können, wirkungsvoll verhindern.

In bevorzugten Ausführungsformen der Erfindung kann vorgesehen sein, dass das in Achsrichtung gemessene Längenverhältnis von Wendelsegment zu Durchbrechung zwischen 2:1 und 5,5:1 vorzugsweise zwischen 3,0:1 und 4,5:1, besonders bevorzugt zwischen 3,5:1 und 4,0:1, liegt. Diese Längenverhältnisse gewährleisten, dass bei einer ausreichenden Breite der Zähne des Kammes für eine zufriedenstellende Zerkleinerung der Kunststoffteile und eine zuverlässige Vermeidung von Ablagerungen oder "Verstopfungen" in den Gängen zwischen den Wendelsegmenten ausreichend lange Wendelsegmente vorhanden sind, welche für eine zuverlässige Weiterförderung des Kunststoffes vorteilhaft sind.

Wenngleich es möglich ist, dass einzelne Wendelsegmente kürzer oder länger sind als andere (z.B. können ausgangsseitig längere Wendelsegmente vorgesehen sein als eingangsseitig, d.h. im Bereich der Zuführung des Kunststoffes zur Welle) kann in einer bevorzugten Ausführungsform auch vorgesehen sein, dass alle Wendelsegmente im wesentlichen gleich lang sind, wodurch eine gleichmäßige Förder- und Zerkleinerungswirkung über die gesamte Länge der Welle gewährleistet ist.

In weiteren bevorzugten Ausführungsformen der Erfindung kann vorgesehen sein, dass die Welle zylindrisch ist und/oder dass eine gedachte, die Wendelsegmente umhüllende Fläche zylindrisch ist. Eine zylindrische Ausführung der Welle bzw. der Wendelsegmente ist nämlich einfacher herstellbar als eine konische Form. Möglich ist aber auch eine beliebige Kombination einer zylindrischen oder konischen Welle mit einer zylindrischen oder konischen, die Wendelsegmente umhüllenden Fläche.

Einfach herstellbar sind des weiteren in einer bevorzugten Ausführungsform der Erfindung im wesentlichen parallel zueinander angeordnete Flanken der Wendelsegmente.

Die Erfindung betrifft des weiteren eine Vorrichtung zum Zerkleinern von insbesondere folienartigen, thermoplastischen Kunststoffen, mit einem Gehäuse in dem eine Welle mit Wendelsegmenten drehend aufgenommen ist, mit einer Zuführöffnung im Gehäuse und mit wenigstens einem Kamm, dessen Zähne zwischen die Wendelsegmente ragen, die erfindungsgemäß dadurch gekennzeichnet ist, dass die Welle nach einem der Ansprüche 1 bis 11 ausgeführt ist.

In einer bevorzugten Ausführungsform der Erfindung kann vorgesehen sein, dass zwei Kämme vorgesehen sind, und dass der erste Kamm von der Mitte der Zuführöffnung aus gemessen in einem Winkel zwischen 110° und 160 °, vorzugsweise zwischen 125° und 145° angeordnet ist, und der zweite Kamm in einem Winkel zwischen 250° und 290°, vorzugsweise zwischen 260° und 280° angeordnet ist.

Es hat sich gezeigt, dass bei einer entsprechenden Anordnung der beiden Kämme eine zufriedenstellende Zerkleinerung des Kunststoffes bei einem zugleich zuverlässigen und kontinuierlichen Transport des Kunststoffes in Förderrichtung gegeben ist.

Da es aber vorkommen kann, dass beim ersten Kamm noch kein ausreichender Förderdruck auf den Kunststoff vorhanden ist, da der erste Kamm relativ nahe nach der Zufuhröffnung liegt, kann im Rahmen der Erfindung auch der erste Kamm weggelassen und nur der in Drehrichtung der Welle gesehen relativ kurz vor der Zufuhröffnung liegende zweite Kamm eingesetzt werden, wobei bei einer ebenfalls zuverlässigen Funktionalität geringere Kosten anfallen.

Die erfindungsgemäße Welle bzw. Vorrichtung kann isoliert, das heißt ohne nachfolgende Komponenten, die den Kunststoff weiter verarbeiten, betrieben werden. Bevorzugt ist allerdings, wenn, wie an sich aus der AT 6 145 U bekannt, in Axialrichtung an das Gehäuse ein Extrudergehäuse und an die Welle eine Extruderwelle anschließt.

Weitere Merkmale und Vorteile der Erfindung ergeben sich aus der nachfolgenden Beschreibung eines bevorzugten Ausführungsbeispieles der Erfindung mit Bezug auf die Zeichnungen.

Es zeigt:
Fig. 1 einen Schnitt durch eine Vorrichtung zum Zerkleinern von Kunststoffen mit einer erfindungsgemäßen Welle und einem angebauten Extruder,
Fig. 2 eine erfindungsgemäße Welle,
Fig. 3 eine Ansicht auf die Welle von Fig. 2 von rechts,
Fig. 4 einen Schnitt durch die Welle von Fig. 2
und die Fig. 5 und 6 einen Kamm in Grund- und Aufriss.

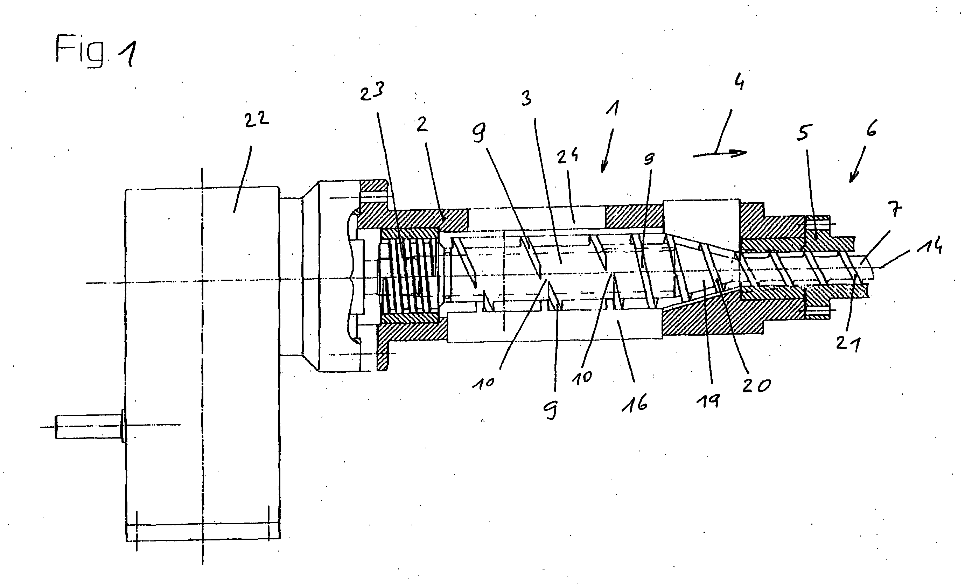

Die Fig. 1 zeigt eine Anordnung bestehend aus einer Vorrichtung zum Zerkleinern und Fördern von insbesondere folienartigen, thermoplastischen Kunststoffen und einem Extruder im Längsschnitt. Die Vorrichtung 1 zum Fördern und Zerkleinern weist ein Gehäuse 2 auf, in der eine Welle 3 drehend aufgenommen ist. Der zu zerkleinernde Kunsstoff wird durch eine Zuführöffnung 24 durch das Gehäuse 2 zur Welle 3 zugeführt.

In Förderrichtung 4 gesehen schließt an das Gehäuse 2 ein Extrudergehäuse 5 eines Extruders 6 an, in dem sich eine Extruderwelle 7 dreht.

Die erfindungsgemäße Welle 3 weist eine Wendel 8 auf, die im in Fig. 2 dargestellten Ausführungsbeispiel aus drei Wendelsegmenten 9 besteht, die von 2 Durchbrechungen 10 voneinander getrennt sind.

Begrenzt werden die Durchbrechungen 10 von Flächen 11, die an den Enden 12 bzw. 13 der Wendelsegmente 9 angeordnet sind, und in der dargestellten Ausführungsform die End- oder Stirnflächen bilden.

Wie Fig. 2 zeigt, sind die Flächen 11 parallel zueinander ausgerichtet und liegen in Radialebenen, wodurch sie sehr einfach dadurch hergestellt werden können, dass im Bereich der Durchbrechungen 10 ein Fräskopf positioniert wird und die Durchbrechungen 10 durch einfaches Drehen der Welle 3 hergestellt werden.

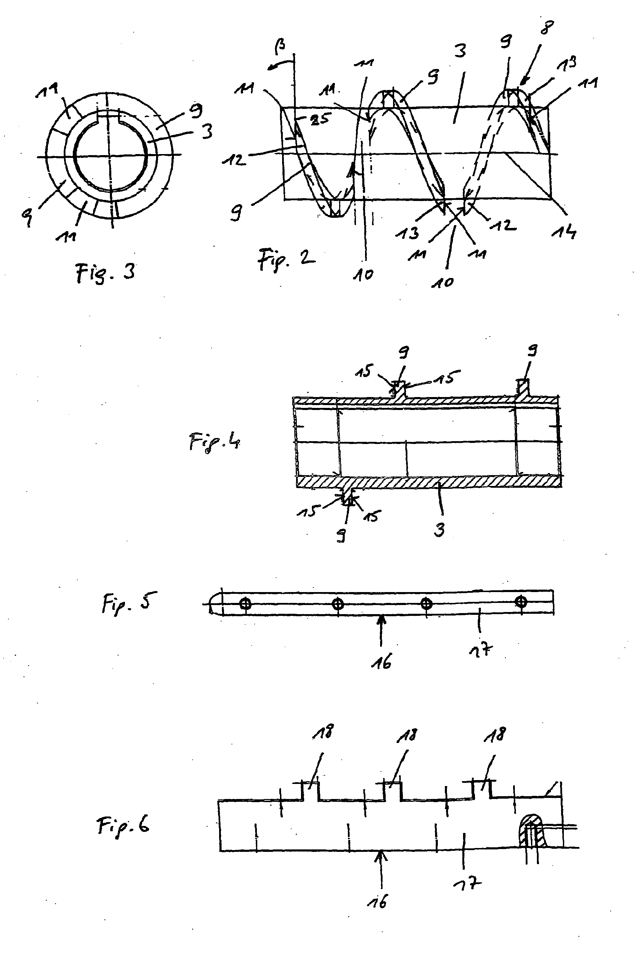

Es versteht sich, dass die Darstellung der Welle in den Fig. 2 bis 4 nur beispielhaft ist um die Anordnung der Wendelsegmente 9 und Durchbrechungen 10 zu zeigen, und dass sowohl Anzahl als auch Form der Wendelsegmente 9 und Durchbrechungen 10 im Rahmen der Ansprüche variiert werden können, insbesondere was ihre Anzahl und Form bzw. Dimensionierung sowie Länge betrifft. Insbesondere sind in den Fig. 2 bis 4 nicht wie in Fig. 1 jene Bereiche dargestellt, in welchen die Welle 3 an die Extruderwelle 7 anschließt. Ebenso ist es grundsätzlich möglich, mehr als eine Wendel 8 mit Wendelsegmenten 9, z.B. zwei Wendeln 8 zu verwenden und die Wendel mit einer sich ändernden Steigung zu versehen.

Während in den Fig. 2 bis 4 eine Ausführungsform dargestellt ist, in welchen die Flächen 11 in einem Winkel von 90° zur Drehachse 14 der Welle angeordnet sind, kann es auch vorteilhaft sein, die Flächen in einem Winkel β zur Radialebene anzuordnen um eine Freistellung der Fläche 11 zu erhalten. Dadurch wird auch die für das Zerkleinern des Kunststoffes maßgebliche Spitze 25 noch etwas spitzer, wodurch die Zerkleinerungswirkung weiter verbessert wird. Eine in einer Durchbrechung 10 gegenüberliegende Fläche 11 kann ebenfalls geneigt sein, entweder in der gleichen Richtung β oder in der Gegenrichtung und mit einem gleichen oder anderen Ausmaß.

Die Flächen 11 können auch derart geneigt sein, dass sich die Durchbrechungen 10 in radialer Richtung nach außen erweitern.

Wie besonders gut in Fig. 4 zu sehen ist, sind die Flanken 15 der Wendelsegmente 9 parallel und radial ausgerichtet, wobei aber auch ein andersartiger Querschnitt der Wendelsegmente 9 denkbar ist, wie dies z.B. in der AT 6145 U beschrieben ist.

Ein Kamm 16, der bei der erfindungsgemäßen Vorrichtung zum Einsatz kommen kann ist in den Fig. 5 und 6 dargestellt. Der Kamm 16 weist einen Grundkörper 17 auf, an dem Zähne 18 angeordnet sind, deren Grundform etwa der Form der Durchbrechung 10 entspricht, mit der Maßgabe, dass die Zähne 18 etwas kleiner bzw. schmäler sind, damit sie mit Spiel in den Durchbrechungen 10 zwischen den Flächen 11 durchgreifen können. In Fig. 1 ist der Kamm 16 nicht in seiner eigentlichen Betriebslage sondern aus darstellerischen Gründen in einer nach unten in die Bildebene gedrehten Stellung dargestellt.

Im Übergangsbereich zwischen der Welle 3 und der Extruderwelle 7 ist ein Übergangskonus 19 mit einer entsprechend geformten Schnecke 20 vorgesehen, die nahtlos an ein Wendelsegment 9 einerseits und an die Schnecke 21 der Extruderwelle 7 andererseits anschließt.

Die Welle 3 kann mit dem Übergangskonus 19 und der Extruderwelle 7 einstückig ausgeführt sein. Es ist aber auch möglich, dass die Welle 3 so wie in Fig. 4 ersichtlich eine Hohlwelle ist, durch die sich eine Verlängerung der Extruderwelle 7 bis zu einem am anderen Ende angeordneten Getriebe 22 erstreckt. Zur drehfesten Verbindung der Zerkleinerungswelle 3 mit der durchgehenden Welle kann z.B. eine Passfederverbindung vorgesehen sein. Am der Extruderwelle 7 gegenüberliegenden Ende schließt an die Welle 3 noch ein Lager 23 an, um zu starke Durchbiegungen der Welle 10 zu verhindern.

## Patentansprüche

1. Welle einer Vorrichtung zum Zerkleinern von insbesondere folienartigen, thermoplastischen Kunststoffen, mit wenigstens einer Wendel (8) als Zerkleinerungswerkzeug auf der Welle (3), wobei die Wendel (8) von wenigstens einer Durchbrechung (10) in Wendelsegmente (9) unterteilt ist, **dadurch gekennzeichnet, dass** die Durchbrechung (10) durch Flächen (11) begrenzt wird, die an den Enden (12, 13) der einzelnen Wendelsegmente (9) liegen und dass die Flächen (11) in einem Winkel größer 0° zur Drehachse (14) der Welle (3) angeordnet sind.

2. Welle nach Anspruch 1, **dadurch gekennzeichnet, dass** die Flächen (11) in einem Winkel größer 45° vorzugsweise größer 80° zur Drehachse (14) der Welle (3) angeordnet sind.

3. Welle nach Anspruch 1 oder 2, **dadurch gekennzeichnet, dass** die Flächen (11) im Winkel von etwa 90° zur Drehachse (14) der Welle (3) angeordnet sind.

4. Welle nach einem der Ansprüche 1 bis 3, **dadurch gekennzeichnet, dass** die Flächen (11) in einem Winkel kleiner 20° vorzugsweise kleiner 10° zueinander geneigt sind.

5. Welle nach einem der Ansprüche 1 bis 4, **dadurch gekennzeichnet, dass** die Flächen (11) eine Freistellung aufweisen, die ausgehend von den Enden (12, 13, 25) der Wendelsegmente (9) in einem Winkel (β) kleiner 10° vorzugsweise kleiner 5° zu einer Radialebene angeordnet sind.

6. Welle nach einem der Ansprüche 1 bis 5, **dadurch gekennzeichnet, dass** die Flächen (11) annähernd parallel zueinander angeordnet sind.

7. Welle nach einem der Ansprüche 1 bis 6, **dadurch gekennzeichnet, dass** das in Achsrichtung gemessene Längenverhältnis von Wendelsegment (9) zu Durchbrechung (10) zwischen 2: 1 und 5,5:1 vorzugsweise zwischen 3,0:1 und 4,5:1, besonders bevorzugt zwischen 3,5:1 und 4,0:1 liegt.

8. Welle nach einem der Ansprüche 1 bis 7, **dadurch gekennzeichnet, dass** alle Wendelsegmente (9) im wesentlichen gleich lang sind.

9. Welle nach einem der Ansprüche 1 bis 8, **dadurch gekennzeichnet, dass** sie zylindrisch ist.

10. Welle nach einem der Ansprüche 1 bis 9, **dadurch gekennzeichnet, dass** eine gedachte, die Wendelsegmente (9) umhüllende Fläche zylindrisch ist.

11. Welle nach einem der Ansprüche 1 bis 10, **dadurch gekennzeichnet, dass** die Flanken (15) der Wendelsegmente (9) im wesentlichen parallel zueinander angeordnet sind.

12. Vorrichtung zum Zerkleinern von insbesondere folienartigen, thermoplastischen Kunststoffen, mit einem Gehäuse (2) in dem eine Welle (3) mit Wendelsegmenten (9) drehend aufgenommen ist, mit einer Zuführöffnung (24) im Gehäuse (2) und mit wenigstens einem Kamm (16), dessen Zähne (18) zwischen die Wendelsegmente (9) ragen, **dadurch gekennzeichnet, dass** die Welle (3) nach einem der Ansprüche 1 bis 11 ausgeführt ist.

13. Vorrichtung nach Anspruch 12, **dadurch gekennzeichnet, dass** zwei Kämme (16) vorgesehen sind, und dass der erste Kamm (16) von der Mitte der Zuführöffnung (24) aus gemessen in einem Winkel zwischen 110° und 160 ° vorzugsweise zwischen 125° und 145° angeordnet ist und der zweite Kamm (16) in einem Winkel zwischen 250° und 290° vorzugsweise zwischen 260° und 280° angeordnet ist.

14. Vorrichtung nach einem der Ansprüche 12 oder 13, **dadurch gekennzeichnet, dass**, wie an sich bekannt, in Axialrichtung an das Gehäuse (2) ein Extrudergehäuse (5) und an die Welle (3) eine Extruderwelle (7) anschließt.
